# EUROPÄISCHE PATENTANMELDUNG

(11) **EP 2 436 559 A1**
(43) Veröffentlichungstag der Anmeldung: **04.04.2012**
(21) Anmeldenummer: 10075606.3
(22) Anmeldetag: 01.10.2010
(51) Int. Cl.: B60R 1/074

(54) **Antriebsanordnung für einen Aussenrückspiegel eines Fahrzeugs**

(71) Anmelder: Magna Auteca AG, 8160 Weiz (AT)
(72) Erfinder: Fuchs, Reinhard, A-8112 Pischelsdorf (AT)
(74) Vertreter: Pfenning, Meinig & Partner GbR

(57) **Zusammenfassung**

Es wird eine Antriebsanordnung für einen Außenrückspiegel eines Fahrzeugs zum Bewegen eines Spiegelkopfes relativ zu einem mit dem Fahrzeug verbundenen Spiegelfuß aus einer Fahrstellung in eine Parkstellung und umgekehrt vorgeschlagen, die einen mit dem Spiegelfuß verbindbaren feststehenden Teil und einen mit dem Spiegelkopf verbindbaren, um eine Drehachse beweglichen Teil, einen Antrieb zum Ausführen der Bewegung zwischen feststehendem und beweglichem Teil, der zumindest einen Elektromotor und ein mit diesem in Wirkverbindung stehendes Zahnrad aufweist, und weiterhin Mittel zum Abheben des beweglichen Teils von dem feststehenden Teil umfasst. Die Mittel zum Abheben sind als mindestens eine auf der Stirnfläche des Zahnrades angeordnete rampenartige Erhöhung und als Laufelemente ausgebildet, wobei die Laufelemente mit dem beweglichen Teil verbunden sind und sich relativ zur Stirnfläche auf dieser bewegen.

## Beschreibung

Die Erfindung betrifft eine Antriebsanordnung für einen Außenrückspiegel eines Fahrzeugs zum Bewegen eines Spiegelkopfes relativ zu einem mit dem Fahrzeug verbundenen Spiegelfuß nach dem Oberbegriff des Hauptanspruchs.

Im Stand der Technik ist eine Vielzahl von Antriebsanordnungen für Außenrückspiegel eines Kraftfahrzeugs bekannt, mittels denen ein das Spiegelglas tragender Spiegelkopf aus einer Fahrstellung, bei der der Außenspiegel zu der Mittelachse des Kraftfahrzeugs ausgeklappt ist, und einer Parkstellung, bei der der Spiegelkopf in Richtung der Mittelachse des Fahrzeugs bewegt wird, und umgekehrt. Üblicherweise befindet sich zwischen dem Spiegelkopf und dem Spiegelfuß ein Spalt, der jedoch Windgeräusche erzeugt. Dadurch wurde dazu übergegangen, eine Dichtung in den Spalt einzubringen, um Windgeräusche, die durch den Spalt zwischen Spiegelkopf und Spiegelfuß entstehen könnten, zu verhindern. Diese Dichtung erschwert jedoch das Drehen des Spiegelkopfes aufgrund der zusätzlichen Reibung.

In der EP 0 931 699 A1 wird zur Lösung dieses Problems vorgeschlagen, den Spiegelkopf bei der Bewegung von der Fahrstellung in die Parkstellung relativ zum Spiegelfuß anzuheben, wobei das Anheben mittels zweier jeweils fest mit dem Spiegelfuß und dem Spiegelkopf verbundenen und um die Drehachse angeordnete Ringe realisiert wird, die jeweils Rampen und Nuten aufweisen, die in der Fahrstellung ineinandergreifen, und die beim Drehen in die Parkstellung aufeinander gleiten und dabei den Kopf vom Spiegelfuß anheben.

Der Erfindung liegt die Aufgabe zugrunde, eine Antriebsanordnung für einen Außenrückspiegel zu schaffen, mit dem ein kontrolliertes Abheben des Spiegelkopfes vom Spiegelfuß möglich ist, wobei die Reibung bei dem Abhebevorgang verringert und das Getriebe entlastet wird.

Diese Aufgabe wird erfindungsgemäß durch die kennzeichnenden Merkmale des Hauptanspruchs in Verbindung mit den Merkmalen des Oberbegriffs gelöst.

Durch die in den Unteransprüchen angegebenen Maßnahmen sind vorteilhafte Weiterbildungen und Verbesserungen möglich.

Dadurch, dass bei einer Antriebsanordnung für einen Außenrückspiegel zum Bewegen eines Spiegelkopfes relativ zu einem feststehenden Spiegelfuß Mittel zum Abheben eines mit dem Spiegelkopf verbindbaren um eine Drehachse beweglichen Teils von einem mit dem Spiegelfuß verbindbaren feststehenden Teil als mindestens eine auf der Stirnfläche eines mit einem Elektromotor in Wirkverbindung stehenden Zahnrads eines Antriebs zum Bewegen des beweglichen Teils relativ zum feststehenden Teil angeordnete rampenartige Erhöhung und als Laufelemente ausgebildet sind, wobei die Laufelemente mit dem beweglichen Teil verbunden sind und sich auf der Stirnfläche des Zahnrades bewegen, wird beim Abheben des beweglichen Teils vom feststehenden Teil die Reibung zwischen den Teilen verringert, so dass die Belastung auf das Getriebe und den Motor des Antriebs vermindert wird.

Vorteilhaft sind die Laufelemente an einem hülsenförmigen Träger angeordnet, der flanschartig die Stirnfläche des Zahnrades übergreift und mit dem beweglichen Teil fest verbunden ist bzw. Bestandteil des beweglichen Teils ist. Dabei umfasst dieses bewegliche Teil beispielsweise das Gehäuse der Antriebsanordnung. Die Laufelemente, vorzugsweise drei, sind dabei an dem Flanschbereich gelagert und arbeiten mit der Stirnfläche, die vorzugsweise ebenfalls drei Rampen umfasst, zusammen.

Die Laufelemente können als Gleiterhebungen oder als Rollen ausgebildet sein, wobei die Gleiterhebungen an der der Stirnfläche zugewandten Unterseite des Flansches des Trägers angebracht bzw. einstückig mit diesem verbunden sind und die Rollen in dem Träger gelagert sind, derart, dass die Gleiterhebungen auf der Stirnfläche gleiten und die Rollen auf ihr ablaufen können.

In einem bevorzugten Ausführungsbeispiel weist der bewegliche Teil und/oder der hülsenartige Träger, der bei der Verwendung von Rollen auch als Rollenträger bezeichnet wird, mindestens ein Verriegelungselement auf, das in der Fahrstellung in eine an dem feststehenden Teil angeordnete Verriegelungsausnehmung eingreift. Somit hat der Träger gleichzeitig die Aufgabe der Verriegelung mit dem feststehenden Teil, wodurch eine Drehbewegung des Trägers bzw. des Verstellergehäuses (bewegliches Teil) und damit auch des Spiegelkopfes in der Fahrposition verhindert wird. Dadurch wird beim manuellen Abklappen bzw. bei äußerer Belastung auf den Spiegelkopf eine Entlastung des Getriebes ermöglicht, d.h., das Getriebe trägt bei äußerer Belastung des Spiegelkopfes in der Fahrposition keine Last.

In bevorzugter Weise weist das Zahnrad bezüglich des feststehenden Teils eine vorgegebene Drehfreiheit auf, die zumindest im Steigungsweg der rampenartigen Erhöhung entspricht. Durch diese Möglichkeit kann die Verriegelung des beweglichen Teils mit dem feststehenden Teil der Antriebsanordnung gezielt vor dem eigentlichen Bewegen des beweglichen Teils aus der Fahrstellung in die Parkstellung gelöst werden, so dass kontrollierte, aufeinanderfolgende Bewegungsabläufe gegeben werden. Dabei entspricht der Winkel zwischen dem tiefsten Teil und dem höchsten Teil der Rampe, d.h. dem Teil vor und hinter der Rampe, dem Winkel der Drehfreiheit und damit dem Weg, den das mindestens eine Verriegelungselement benötigt, um außer Eingriff zu der Verriegelungsausnehmung zu kommen, d.h. die Rampenlänge gibt die Drehfreiheit des Zahnrads vor und die Rampenhöhe muss mindestens gleich aber vorzugsweise etwas größer als die Verriegelungshöhe sein.

In einem besonders bevorzugten Ausführungsbeispiel ist zwischen Zahnrad und dem feststehenden Teil eine Feder, vorzugsweise eine Drehfeder, angeordnet, wobei die Reibungskräfte zwischen beweglichem Teil, Zahnrad und feststehendem Teil und die Federkraft der Feder sowie die der Spiralfeder, die zum Aufbringen einer Vorspannkraft auf das Zahnrad am beweglichen Teil angeordnet ist, so aneinander angepasst, dass die Feder das Abheben des beweglichen Teils vom feststehenden Teil bei der Bewegung aus der Fahrstellung in die Parkstellung unterstützt und das Drehen des Zahnrades gemäß einer vorgegebenen Drehfreiheit bei der Bewegung aus der Parkstellung in die Fahrstellung erschwert. Durch diese Maßnahme wird das folgende Problem verhindert. Zum Ausklappen des Spiegels ist es notwendig, die Drehrichtung des Motors des Antriebs umzukehren. Das Zahnrad hat bezüglich des feststehenden Teils in diese Richtung eine gewisse Drehfreiheit, die beim Einklappen verwendet wurde, um den Spiegel anzuheben. Entsprechend den auftretenden Reibungskräften wird entweder der Spiegelkopf still stehen und das Zahnrad verdreht oder umgekehrt. Dies kann zu einem unkontrollierten oder unästhetischen Bewegungsablauf führen. Wird das Zahnrad zuerst verdreht und dann erst der Spiegelkopf, kommt es dazu, dass der Spiegelkopf bzw. der bewegliche Teil sich vor Erreichen der Fahrstellung absenken will. Ein Absenken ist aber nicht möglich, da die Verriegelungselemente am Träger bzw. Rollenträger oder am beweglichen Teil und am feststehenden Teil nur genau in der Fahrstellung eingreifen können. Würde der Spiegelkopf die Fahrstellung, in der die Verriegelung stattfinden kann, erreichen, würde ein plötzliches Absenken erfolgen. Dies führt zu einem lauten Geräusch und ist somit nicht annehmbar. Erwünscht ist, dass beim Ausklappen der Spiegelkopf bzw. das bewegliche Teil zuerst in die Fahrstellung gebracht wird und dann über Verdrehung des Zahnrads langsam abgesenkt. Somit muss das Drehmoment, das benötigt wird, um den Spiegel auszuklappen (Parkstellung in Fahrstellung) kleiner sein als jenes, das benötigt wird, um das Zahnrad zu drehen. Durch die erfindungsgemäß angebrachte Feder zwischen feststehendem und beweglichen Teil wird das Zurückdrehen des Zahnrads beim Ausklappen des Spiegels aus der Parkstellung in die Fahrstellung erschwert und nach Erreichen der Fahrstellung, die durch einen Anschlag vorgegeben wird, wird das Zahnrad entgegen der Federspannung der Drehfeder verdreht, bis seine Drehfreiheit aufgebraucht ist. Durch dieses "Aufziehen" der Feder wird dann beim Abklappen die Abhebebewegung gegen die Spiralfeder unterstützt. Prinzipiell sind andere Federn verwendbar, z.B. Druck-, Zug-, Biegefeder, Torsionsstab, wobei eine flache Federkennlinie und eine große Vorspannung erwünscht sind. Das Hilfsmoment sollte während des Hebens möglichst konstant bleiben. Bei der vorgegebenen Geometrie ist dies mit einer Drehfeder am besten erreichbar.

Eine weitere Ausführungsform sieht vor, dass ein federbelastetes Rastelement, vorzugsweise ein Raststift, in dem beweglichen Teil aufgenommen ist, das mit einem am feststehenden Teil angeordneten Anschlag die Fahrstellung vorgibt. Dabei weist das feststehende Teil vorzugsweise eine Rastscheibe mit Anschlägen auf, auf der der mindestens federbelastete Raststift gleiten kann, bis ein Anschlag erreicht wird.

Nach einem weiteren Ausführungsbeispiel weist der feststehende Teil eine Rastscheibe mit mindestens einer radialen Nut, vorzugsweise drei Nuten, zur Aufnahme einer über eine Feder vorgespannte Wippe auf, wobei die Wippe in radialer Richtung nebeneinander angeordnete Nocken mit unterschiedlichen Aufstellwinkeln umfasst. Mit dieser Ausführungsform wird eine alternative Möglichkeit der Verriegelung zwischen feststehendem Teil und beweglichem Teil und der Steuerung des kontrollierten Bewegungsablaufs ermöglicht. Dazu greift in der Fahrstellung einer der Nocken in eine am beweglichen Teil und/oder dem Rollenträger angeordnete Verriegelungsausnehmung ein und verhindert beim Abhebevorgang ein Drehen des beweglichen Teils. Der andere der Nocken greift nach Abheben des beweglichen Teils in eine an dem Zahnrad vorgesehene Verriegelungsausnehmung, was nur möglich ist, wenn der bewegliche Teil vollständig angehoben ist. Diese Nocke ersetzt den Raststift des vorhergehenden Ausführungsbeispiels. Hier erfolgt die Entkopplung der Bewegungsabläufe eher formschlüssig als bei Verwendung einer Drehfeder (rein kraftschlüssig).

Ausführungsbeispiele der Erfindung sind in der Zeichnung dargestellt und werden in der nachfolgenden Beschreibung näher erläutert. Es zeigen
- Fig. 1.: einen Außenspiegel in Vorderansicht und Aufsicht in unterschiedlichen Stellungen bezüglich eines nicht dargestellten Fahrzeugs,
- Fig. 2.: einen Schnitt durch einen Teil der erfindungsgemäßen Antriebsanordnung mit feststehendem und beweglichem Teil und Rollenträger sowie Zahnrad,
- Fig. 3.: eine perspektivische Ansicht einerseits des feststehenden Teils mit Zahnrad und Rollenträger, teilweise geschnitten (a) und andererseits die gesamte Antriebsanordnung,
- Fig. 4.: teilweise geschnitten (b), Ansichten gemäß Fig. 3 beim Abheben des beweglichen Teils vom feststehenden Teil (a) und des Drehens des beweglichen Teils zum feststehenden Teil aus der Fahrstellung in die Parkstellung (b),
- Fig. 5.: eine Ansicht gemäß Fig. 4(b) mit einer Drehfeder zum Erschweren des Ausklappvorgangs,
- Fig. 6.: ein weiteres Ausführungsbeispiel des feststehenden Teils mit Verriegelungsmöglichkeiten (Fig. 6a) und ein zugeordnetes Abriebzahnrad (Fig. 6b) in perspektivischer Ansicht.
- Fig. 7.: eine perspektivische Ansicht der erfindungsgemäßen Antriebsanordnung, teilweise geschnitten in verschiedenen Zuständen des Bewegungsablaufs.

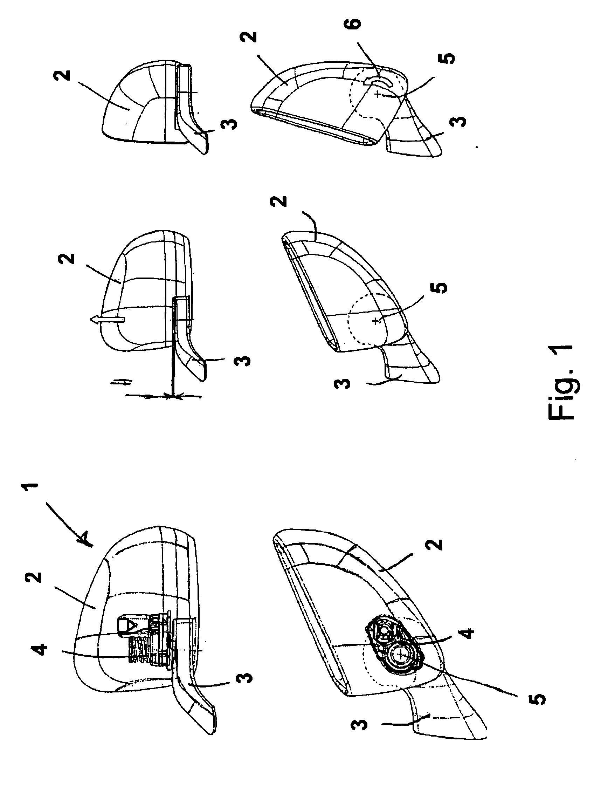

In Fig. 1 sind unterschiedliche Stellungen eines Außenspiegels 1 beim Abklappvorgang zwischen einer Fahrstellung in eine Parkstellung dargestellt. Der Spiegel 1 weist einen Spiegelkopf 2 mit nicht dargestelltem Spiegelglas, einen Spiegelfuß 3, der mit einem nicht dargestellten Kraftfahrzeug verbunden ist, und eine zwischen Spiegelkopf 2 und Spiegelfuß 3 angeordnete Antriebsanordnung 4 zur Steuerung des Bewegungsablaufs des Spiegelkopfes relativ zum Spiegelfuß dargestellt. Links und mittig in der Fig. 1 ist der Spiegelkopf 2 in seiner Fahrstellung, wobei er mittig von dem Spiegelfuß abgehoben ist, so dass ein Spalt H zwischen Spiegelkopf 2 und Spiegelfuß 3 erzeugt wird. In Fig. 1 rechts befindet sich der Spiegelkopf 2 in der Parkstellung, bei der er zum Kraftfahrzeug abgeklappt ist, wobei die Bewegung bzw. die Drehung um die Drehachse 5 des Antriebs 4 durch den Pfeil 6 angedeutet ist. In dieser Stellung weist der Spiegelkopf 2 zu dem Spiegelfuß 3 weiterhin den Spalt H auf. Beim Wiederausklappen sollen die Stellungen in genau der umgekehrten Reihenfolge durchlaufen werden.

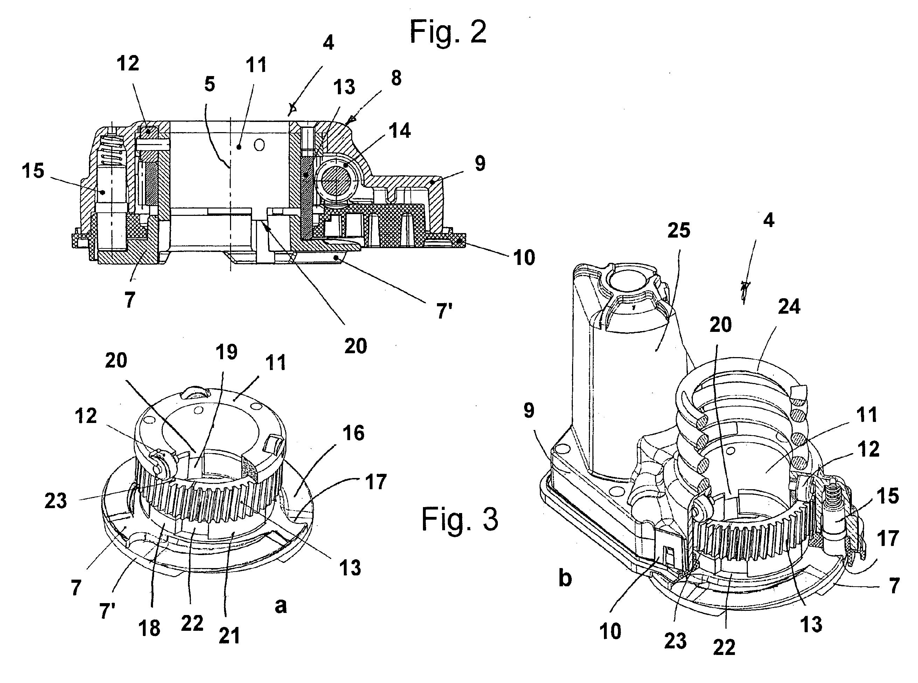

In Fig. 2 ist ein Schnitt durch die Antriebsanordnung 4 dargestellt. Als feststehender Teil der Antriebsanordnung 4 ist eine Rastscheibe 7 vorgesehen, die mit dem in dieser Figur nicht darstellten Spiegelfuß 3 verbunden ist. Zu der feststehenden Rastscheibe 7 ist ein beweglicher Teil 8 vorgesehen, der sich aus mehreren Bestandteilen zusammensetzt, nämlich einem Gehäuse 9, einem mit dem Gehäuse verbundenen Deckel 10 sowie einem hülsenartigen Rollenträger 11, an dem mehrere Rollen 12, im Ausführungsbeispiel drei Rollen, gelagert sind. Der Rollenträger ist in der Fig. 2 als eigenes Bauteil gezeigt, das mit dem Gehäuse 9 verschraubt ist, er kann jedoch auch als Teil des Gehäuses 9 ausgebildet sein. In dem Gehäuse 9 ist ein Abtriebszahnrad 13 aufgenommen, das zumindest teilweise relativ zum Rollenträger 11 beweglich ist und das von einer Schnecke 14 angetrieben wird. Weiterhin ist ein federbelasteter Raststift 15 zu erkennen, der zur Festlegung der Fahrstellung des Spiegelkopfes 2 und somit des beweglichen Teils 8 dient.

In Fig. 3a ist der Rollenträger 11 mit Abtriebszahnrad 13 sowie Rastscheibe 7 gesondert dargestellt, während in Fig. 3b die gesamte Antriebsanordnung 4, teilweise geschnitten in der Fahrposition zu erkennen ist. Die Rastscheibe weist mehrere Gleitbahnen 16 für den Raststift 15 auf, die durch einen Anschlag 17 begrenzt sind.

Prinzipiell ist es möglich, mehrere Raststifte 15, d.h. maximal drei mit einer Teilung von 120° unterzubringen, was für schwere Antriebe sinnvoll ist. Auf der Unterseite der Rastscheibe 7 sind drei Klauen 7' einer Art Klauensicherheitskupplung angebracht, deren Gegenstücke sich am Spiegelfuß befinden. Diese Kupplungshälften werden über die Spiegelfeder ineinander gedrückt. Wird der Spiegel in Fahrstellung zu stark mechanisch beansprucht löst sich die Kupplung und der Spiegel kann nachgeben. Dies dient dem manuellen Abklappen und als Fußgängerschutz. Die Kupplungsteile stehen dann Klaue an Klaue. Wird der Abklappantrieb dann elektrisch betätigt, klappt der Spiegel ein bis er am inneren Spiegelanschlag ansteht. Dann wird die Antriebskraft verwendet, die Rastscheibe 7 zu verdrehen bis die Sicherheitskupplung wieder einrastet. Dies kann alle 120° passieren. Damit dann die Fahrstellung wieder korrekt eingenommen wird, muss der Raststift 15 also ebenfalls alle 120° einen Anschlag 17 finden.

Weiterhin ist die Rastscheibe 7 mit Ansätzen 18 versehen, die einerseits zur Begrenzung der Bewegung des Abtriebszahnrads 13 dienen und andererseits jeweils Verriegelungsausnehmungen 19 aufweisen, die mit an dem Rollenträger 11 angeordneten Verriegelungsfingern 20 in Eingriff treten können.

Das Abtriebszahnrad 13 ist auf der der Rastscheibe 7 zugeordneten Seiten mit Ansätzen 21 versehen, die zum Abstützen auf der Rastscheibe 7 dienen. Damit sich das Abtriebszahnrad 13 relativ zur Rastscheibe 7 bewegen kann, ist zwischen den Ansätzen 18 der Rastscheibe 7 und den Ansätzen 21 des Zahnrads 13 ein Spiel 22 vorgegeben, das eine Drehfreiheit des Zahnrades 13 relativ zur Rastscheibe vorgibt.

Auf der der Rastscheibe 7 abgewandten Stirnfläche des Abtriebszahnrads 13, die flanschartig von dem Rollenträger 11 übergriffen wird, sind Rampen, im Ausführungsbeispiel drei Rampen 23 angeordnet, die mit den in dem Flansch des Rollenträgers 11 gelagerten Rollen 12 zusammenwirken, wenn die Rollen 12 auf der Stirnfläche des Abtriebszahnrads 13 abrollen. Der von dem tiefsten Punkt zu dem höchsten Punkt der Rampe vorgegebene Weg bzw. Winkel entspricht dem Spiel 22 bzw. dem Winkel der Drehfreiheit des Abtriebszahnrads 13.

In der Fig. 3b, die die Antriebsanordnung 4 in der Fahrposition zeigt, ist eine Spiralfeder 24 zu erkennen, die auf das Gehäuse 9 bzw. den Rollenträger 11 drückt und die eine Vorspannkraft auf das Abtriebszahnrad 13 vorgibt. Der federbelastete Raststift 15 liegt in der Fahrstellung am Anschlag 17 der Rastscheibe 7 an. Die Finger 20 am unteren Ende des Rollenträgers 11, der fest mit dem Gehäuse 9 verbunden ist, befinden sich in Eingriff mit den Verriegelungsausnehmungen oder Schlitzen in der Rastscheibe und verhindern eine Drehbewegung des Rollenträgers 11 bzw. des Gehäuses 9 des Spiegelverstellers und damit des Spiegelkopfes. Die Rollen 12 befinden sich am tiefsten Punkt der Rampen des Abtriebszahnrads 13.

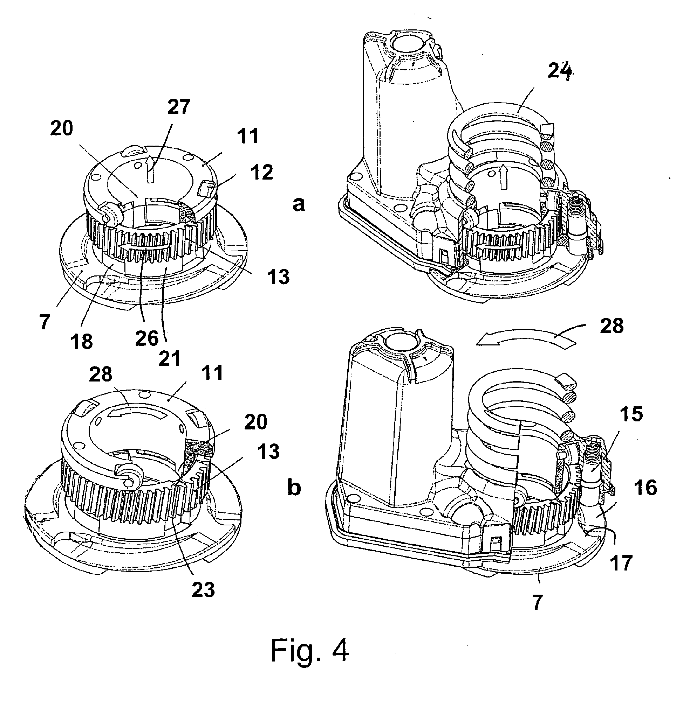

In der Fig. 3b ist ein Elektromotor 25 bzw. das ihn umgebende Gehäuse zu erkennen, der die Schnecke 14 antreibt. In Fig. 4 ist die Antriebsanordnung 4 einerseits in der angehobenen Position des beweglichen Teils 8 in Bezug auf den als Rastscheibe 7 ausgebildeten feststehenden Teil (a) und andererseits im abgeklappten Zustand in der Parkstellung (b). Wenn die Antriebsanordnung 4 den Spiegelkopf 2 in die Parkstellung bringen soll, treibt der Motor 25 über die Schnecke 14 das Abtriebszahnrad 13 an, das sich in die in Fig. 4a gezeigte Richtung 26 verdreht bis die Ansätze 18 und 21 jeweils der Rastscheibe und des Abtriebszahnrads aneinander stoßen und die Drehfreiheit durch das Spiel 22 aufgebraucht ist. Durch die Drehung werden die Rollen von den stirnseitigen Rampen 23 des Abtriebszahnrads 13 nach oben gezwungen, wobei die Drehung des beweglichen Teils 8 und somit des Spiegelkopfes 2 durch die Verrieglung zwischen Finger 20 und Schlitz 19 verhindert wird, die gleichzeitig für den Rollenträger 11 als axiale Führung bei der durch den Pfeil 27 angedeuteten Anhebebewegung dient. Die Spiralfeder 24 wird bei dieser Bewegung zusammengedrückt. Erreichen die Rollen 12 das Ende der Rampen 23, ist der bewegliche Teil 8, d.h. Gehäuse 9 und Rollenträger 11 auf die voll Höhe angehoben und die Verrieglung des Rollenträgers 11 nicht mehr wirksam, da die Finger 20 vollständig aus den Schlitzen 19 der Rastscheibe herausgezogen sind.

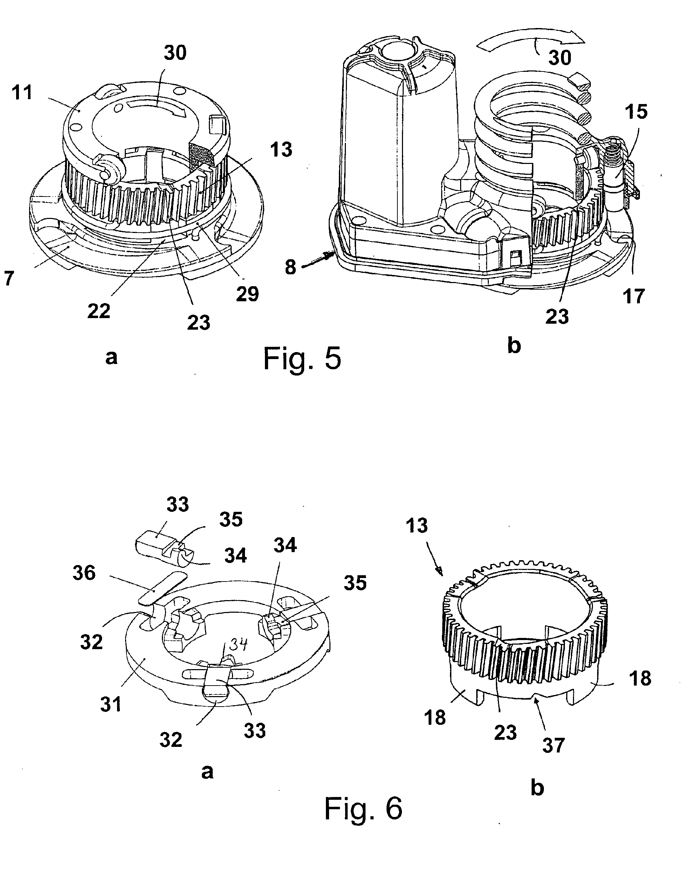

Nachdem der feststehende Teil 8 vollständig angehoben ist und das Abtriebszahnrad 13 aufgrund seines Anschlags gegen die Ansätze 18 stillsteht, wird wiederum von dem Motor über die Schnecke und das Abtriebszahnrad 13 der bewegliche Teil bzw. das Gehäuse mit Rollenträger 11 und die Drehachse 5 und um das nun feststehende Abtriebszahnrad 13 gedreht und der Spiegelkopf wird eingeklappt. Dies ist in Fig. 4b zu erkennen, wobei die Drehbewegung durch die Pfeile 28 angedeutet wird. Dabei löst sich der Raststift 15 vom Anschlag 17 und gleitet auf der Bahn 16 der Rastscheibe 7. In der Parkstellung bleibt der Spiegelkopf in der von den Rampen 23 vorgegebenen angehobenen Position. In Fig. 5 ist zusätzlich zu den vorhergehenden Darstellungen eine Drehfeder 29 dargestellt, um die Ansätze 18 der Rastscheibe 7 und die Ansätze 21 des Abtriebszahnrads 13 herum angeordnet ist und einerseits mit dem Abtriebszahnrad 13 und andererseits mit der Rastscheibe 7 verbunden ist.

Fig. 5 zeigt die Parkstellung bei Beginn des Zurückklappens des Spiegelkopfes 2, was durch die Pfeile 30 angedeutet ist. Die Drehfeder 29 bzw. Aufziehfeder, die unter einer gewissen Vorspannung steht, erschwert das Zurückdrehen des Abtriebszahnrades 13 beim Ausklappen des Spiegelkopfes 2, damit zuerst der bewegliche Teil 8 gedreht wird. Erreicht der bewegliche Teil 8 die Fahrstellung, wird seine weitere Drehung durch den Raststift 15 verhindert, der wieder mit dem Anschlag 17 in Eingriff tritt. Damit wird nun das Abtriebszahnrad 13 entgegen der Federspannung der Drehfeder 29 verdreht, bis seine durch das Spiel 22 gegebene Drehfreiheit aufgebraucht ist. Dabei wird der Spiegelkopf bzw. der bewegliche Teil 8 langsam über die Rampen 23 abgesenkt. Diese Drehfeder 29 unterstützt dann bei Beginn des Abklappvorgangs wieder das Heben des beweglichen Teils 8 bzw. des Spiegelkopfes 2. Zusammenfassend wird beim Anheben zu Beginn des Einklappvorgangs die Drehfeder 29 bis auf die Vorspannkraft entspannt, die dadurch beim Anheben hilft und die axiale Druckfeder 24 des Spiegelantriebs wird um die Hebehöhe weiter gespannt. Beim Einklappen besteht ebenso wie beim späteren Ausklappen eine konstante Kraft bei der Drehfeder und der Druckfeder. Beim Absenken wird die Drehfeder 29 gespannt und die axiale Druckfeder 24 um die Hebehöhe entspannt.

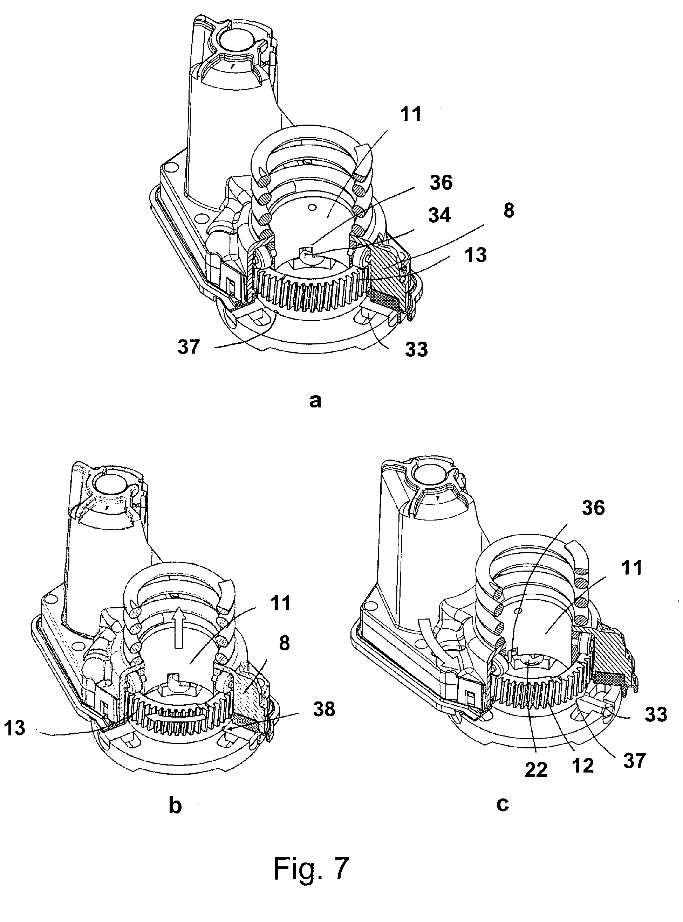

In den Fign. 6 und 7 ist eine weitere Möglichkeit dargestellt, um die erwünschte Bewegungsabfolge beim Ein- und Ausklappen des Spiegelkopfes zu erhalten. In diesem Ausführungsbeispiel wird eine als feststehendes Teil ausgebildete Rastscheibe 31 verwendet (Fig. 6a), die drei radiale Bohrungen 32 mit kreissegmentartigem Querschnitt aufweist, in der jeweils eine zylindrische Wippe 33 aufgenommen ist. Die Wippe 33 ist dabei als Zylindersegment ausgebildet, das sich in der jeweiligen radialen Bohrung 32 geringfügig um die eigene Achse drehen kann. Die Wippe weist an ihrem nach innen gerichteten Ende jeweils radial nebeneinander liegende Nocken, einen radial innen liegenden Nocken 34 und einen radial außen liegenden Nocken 35 auf, wobei der innere Nocken 34 etwas über die flache Seite der Wippe herausragt und beide Nocken 34, 35 zueinander unterschiedliche Schrägungen bzw. Winkel haben. Eine Feder, vorzugsweise eine Blattfeder 36 hält die Wippe in einer bevorzugten Stellung. Diese Stellung zeichnet sich dadurch aus, wie die nicht explosionsartig dargestellten Wippen 33 zeigen, dass die inneren Nocken 34 aufgestellt sind und die äußeren Nocken 35 bündig mit der Fläche der Rastscheibe 31 sind.

In Fig. 6b ist ein Abtriebszahnrad 13 dargestellt, das sich von dem des vorherigen dadurch unterscheidet, dass in dem das Spiel 22 vorgebenden Bereich zwischen den Ansätzen 18 eine zackenartige Ausnehmung 37 zur Aufnahme eines radial außen liegenden Nockens 35 angeordnet ist.

In Fig. 7 ist wiederum die Antriebsanordnung 4 in verschiedenen Stellungen dargestellt, in Fig. 7a in der Fahrpositionsstellung, in Fig. 7b die Antriebsanordnung beim Anheben des Spiegelkopfes und Fig. 7c beim Einklappen. In Fig. 7a hat der Rollenträger 11 oder das Gehäuse am zur Rastscheibe 31 zugewandten Ende drei Ausnehmungen 36, in die die inneren Nocken 34 in der Fahrposition eingreifen können und somit ein Verdrehen des Spiegelkopfes verhindern. Das Antriebszahnrad 13 liegt auf den äußeren Nocken 35 der Wippen 33 auf und verhindert eine Drehung der Wippen 33. Wird das Abtriebszahnrad 13 gemäß Fig. 7b angetrieben, werden durch die Rampen der Stirnfläche der Rollenträger 11 und das Gehäuse 8 nach oben angehoben, wobei der innere Nocken 34 während des Hebevorgangs eine Drehung des beweglichen Teils bzw. des Spiegelkopfes verhindert.

Die Fign. 7b und 7c zeigen die Antriebsanordnung zu Beginn und beim Einklappvorgang, wobei nach Austreten des inneren Nockens 34 aus der Ausnehmung 36 das bewegliche Teil gedreht wird und durch die Drehbewegung werden die inneren Nocken 34 der Wippen 33 umgelegt und die äußeren Nocken 35 aufgestellt. Dies ist nur möglich, wenn der Spiegelkopf 2 bzw. das bewegliche Teil vollständig von dem feststehenden Teil bzw. der Rastscheibe 31 angehoben ist, da nur in dieser Stellung, d.h. wenn die Drehfreiheit des Abtriebszahnrads vollständig aufgebrauch ist, die Ausnehmung 37 im Abtriebszahnrad 13 eine Drehung der Wippen 33 erlaubt (siehe Pfeil 38). Das Abtriebszahnrad 13 wird nun durch die äußeren Nocken 35 am Drehen gehindert. Erreicht der Spiegelkopf wieder die Fahrstellung, decken sich die Ausnehmungen 36 mit den inneren Nocken 34 der Wippen 33 und die Blattfedern 36 bewirken, dass die Wippen 33 wieder in die Anfangsstellung drehen. Dadurch wird eine weitere Drehung des beweglichen Teils verhindert und gleichzeitig das Abtriebszahnrad 13 freigegeben, welches anschließend den Spiegelkopf in der Fahrposition absenken kann.

In den oben beschriebenen Ausführungsbeispielen ist der hülsenartige Träger als Rollenträger 11 ausgebildet, an dem die auf der Stirnfläche des Zahnrads 13 ablaufenden Rollen 12 drehbar angebracht sind. In einem nicht dargestellten Ausführungsbeispiel können an de Unterseite des die Stirnfläche des Zahnrads 13 übergreifenden Flansches des Trägers Gleiterhebungen, die einstückig mit dem Flansch verbunden sind oder auch getrennt aufgebracht werden, angeordnet sein, die auf der Stirnfläche beim Anhebe- bzw. Absenkvorgang entlang gleiten.

## Patentansprüche

1. Antriebsanordnung für einen Außenrückspiegel eines Fahrzeugs zum Bewegen eines Spiegelkopfes relativ zu einem mit dem Fahrzeug verbundenen Spiegelfuß aus einer Fahrstellung in eine Parkstellung und umgekehrt, umfassend:
einen mit dem Spiegelfuß verbindbaren feststehenden Teil (7) und einen mit dem Spiegelkopf verbindbaren, um eine Drehachse (5) beweglichen Teil (8),
einen Antrieb (25, 14, 13) zum Ausführen der Bewegung zwischen feststehendem (7) und beweglichem (8) Teil, der zumindest einen Elektromotor (25) und ein mit diesem in Wirkverbindung stehendes Zahnrad (13) aufweist,
und Mittel zum Abheben des beweglichen Teils von dem feststehenden Teil,
**dadurch gekennzeichnet,**
**dass** die Mittel zum Abheben als mindestens eine auf der Stirnfläche des Zahnrades (13) angeordnete rampenartige Erhöhung (23) und als Laufelemente (12) ausgebildet sind, wobei die Laufelemente mit dem beweglichen Teil (8) verbunden sind und sich relativ zur Stirnfläche auf dieser bewegen.

2. Antriebsanordnung nach Anspruch 1, **dadurch gekennzeichnet, dass** die Laufelemente (12) an einem hülsenförmigen Träger (11) angeordnet sind, der die Stirnfläche des Zahnrades (13) übergreift und mit dem beweglichen Teil (8) fest verbunden ist.

3. Antriebsanordnung nach Anspruch 1 oder Anspruch 2, **dadurch gekennzeichnet, dass** die Laufelemente als Gleiterhebungen ausgebildet sind, die gegenüberliegend zur Stirnfläche des Zahnrades (13) an dem Träger angebracht sind und auf der Stirnfläche gleiten.

4. Antriebsanordnung nach Anspruch 1 oder Anspruch 2, **dadurch gekennzeichnet, dass** die Laufelemente als Rollen (12) ausgebildet sind, die in dem als Rollenträger (11) bezeichneten Träger gelagert sind und auf der Stirnfläche des Zahnrades (13) ablaufen.

5. Antriebsanordnung nach einem der Ansprüche 1 bis 4, **dadurch gekennzeichnet, dass** der bewegliche Teil (8) und/oder der hülsenförmige Träger (11) mindestens ein Verriegelungselement (20) aufweist, das in der Fahrstellung in eine an dem feststehenden Teil angeordnete Verriegelungsausnehmung (19) eingreift.

6. Antriebsanordnung nach einem der Ansprüche 1 bis 5, **dadurch gekennzeichnet, dass** das Zahnrad (13) bezüglich des feststehenden Teils (8) eine vorgegebene Drehfreiheit aufweist, die zumindest dem Steigungsweg der rampenartigen Erhöhung (23) entspricht.

7. Antriebsanordnung nach einem der Ansprüche 1 bis 6, **dadurch gekennzeichnet, dass** eine Spiralfeder (24) zum Aufbringen einer Vorspannkraft auf das Zahnrad (13) am beweglichen Teil (8) angeordnet ist und dass zwischen Zahnrad (13) und feststehendem Teil eine Feder (29), vorzugsweise eine Drehfeder, angeordnet ist.

8. Antriebsanordnung nach Anspruch 7, **dadurch gekennzeichnet, dass** die Reibungskräfte zwischen beweglichem Teil, Zahnrad (13) und feststehendem Teil und die Federkräfte der Federn so aneinander angepasst sind, dass die Feder zwischen Zahnrad (13) und feststehendem Teil (7) das Abheben des beweglichen Teils (8) vom feststehenden Teil (7) bei der Bewegung aus der Fahrstellung in die Parkstellung unterstützt und das Drehen des Zahnrads (13) gemäß einer vorgegebenen Drehfreiheit bei der Bewegung aus der Parkstellung in die Fahrstellung erschwert.

9. Antriebsanordnung nach einem der Ansprüche 1 bis 8, **dadurch gekennzeichnet, dass** mindestens ein federbelastetes Rastelement (15), vorzugsweise ein Raststift, in dem beweglichen Teil (8) aufgenommen ist, das mit mindestens einem am feststehenden Teil (7) angeordneten Anschlag (17) die Fahrstellung vorgibt.

10. Antriebsanordnung nach einem der Ansprüche 1 bis 4, oder 6 bis 9, **dadurch gekennzeichnet, dass** der feststehende Teil eine Rastscheibe (31) mit mindestens einer radialen Nut (32) zur Aufnahme einer über eine Feder (36) vorgespannte Wippe (33) aufweist, wobei die Wippe (33) in radialer Richtung nebeneinander angeordnete Nocken (35, 34) mit unterschiedlichen Aufstellwinkeln umfasst.

11. Antriebsanordnung nach Anspruch 10, **dadurch gekennzeichnet, dass** in der Fahrstellung einer der Nocken (34) in eine am beweglichen Teil und/oder an dem Träger (11) angeordnete Verriegelungsausnehmung (36) eingreift und beim Abhebevorgang ein Drehen des beweglichen Teils verhindert.

12. Antriebsanordnung nach Anspruch 10 oder 11, **dadurch gekennzeichnet, dass** der andere der Nocken (35) nach Abheben des beweglichen Teils in eine an dem Zahnrad vorgesehene Verriegelungsausnehmung eingreift.
